# EUROPÄISCHE PATENTSCHRIFT

(11) **EP 3 611 119 B1**
(45) Veröffentlichungstag und Bekanntmachung des Hinweises auf die Patenterteilung: **29.03.2023**
(21) Anmeldenummer: 19190055.4
(22) Anmeldetag: 05.08.2019
(51) Int. Cl.: B65G 69/28

(54) **VORSCHUB-LADEBRÜCKE SOWIE VERFAHREN ZUM BETRIEB DERSELBEN**
FEED CHARGING BRIDGE AND METHOD FOR OPERATING THE SAME
PONT DE CHARGEMENT D'AVANCE AINSI QUE PROCÉDÉ DE FONCTIONNEMENT D'UN TEL PONT DE CHARGEMENT D'AVANCE

(30) Priorität: 14.08.2018 DE 102018119780; 15.11.2018 DE 102018128760
(43) Veröffentlichungstag der Anmeldung: 19.02.2020
(73) Patentinhaber: Hörmann KG Antriebstechnik, 33803 Steinhagen (DE)
(72) Erfinder: SOSNA, Karsten, 338529 Borgholzhausen (DE); SANKE, Michael, 33378 Rheda-Wiedenbrück (DE)
(74) Vertreter: KASTEL Patentanwälte PartG mbB

(56) Entgegenhaltungen:
- EP-A1- 3 266 732
- DE-A1- 10 208 931
- DE-A1-102010 011 325
- DE-U1-202017 103 380
- US-A1- 2017 320 685

## Beschreibung

Die Erfindung betrifft eine Vorschub-Ladebrücke sowie ein Verfahren zum Betrieb einer derartigen Vorschub-Ladebrücke.

Vorschub-Ladebrücken sind beispielsweise aus folgenden Literaturstellen bekannt:
[1] Firmendruckschrift "Verladetechnik" der Hörmann KG Verkaufsgesellschaft mit dem Druckvermerk:
   Stand 12.2016 / Druck 12.2016 / HF86278DE/PDF
[2] EP 3 266 732 A1

Bei verschiedenen Situationen gibt es das Bedürfnis, ein Fahrzeug, wie beispielsweise ein Lastkraftwagen, mit noch geschlossenem Laderaumabschluss anzudocken, so dass das Öffnen des Laderaumabschlusses durch das Ladepersonal an der Ladestelle erfolgen kann. Bei in der Ruhestellung befindlicher Ladebrücke besteht dabei zwischen einem Fahrzeug, welches bereits gegen Anfahrpuffer gefahren ist, und dem vorderen Ende der Ladebrücke ein Abstand, in den eine Person, welche die Laderaumdeckung öffnen möchte, fallen könnte. Daher sollte bei einer derartigen Verfahrensweise des Öffnens des Laderaumes bei angedocktem Fahrzeug eine Vorschublippe einer Vorschub-Ladebrücke erst in eine Zwischenstellung verfahren werden, um diesen Abstand zu verringern. Die Person kann dann auf der Vorschub-Ladebrücke stehen, wenn sie den Laderaum öffnet.

DE 20 2017 1003380 U1 beschreibt eine Ladebrücke mit einer Ladelippe zum Auflegen auf eine Ladefläche eines Fahrzeugs, die eine Sensoreinrichtung an der Ladelippe aufweist, um die Ladebrücke hinsichtlich Bedienbarkeit und hinsichtlich Zeit- und Ressourceneinsparung zu verbessern.

DE 102 08 931 A1 zeigt eine Überladebrücke zum Einbau in Verladerampen mit einer ersten Hubeinrichtung zum Anheben und Absenken einer Plattform, und mit einer zweiten Hubeinrichtung zum Ein- und Ausfahren einer Vorschublippe, die an einer Verladekante der Plattform angeordnet ist. Eine Einrichtung dient zum manuellen Betätigen der beiden Hubeinrichtungen. Dadurch soll die Sicherheit erhöht werden.

US 2017/320685 A1 beschreibt beschreibt ein Steuerungssystem zum Betrieb einer Ladeeinrichtung. Auf einem Display werden sequentiell Steuerelemente dargestellt. Die visuelle Erscheinung oder Sequenz der Darstellung zeigt dem Benutzer die richtige Sequenz der Auswahl, um Konfusion des Benutzers zu reduzieren und den Betrieb der Ladeeinrichtung zu vereinfachen.

In der Literaturstelle [2] wird zur Gewährleistung eines großen Maßes an Sicherheit bei einem vielseitigen Einsatz vorgeschlagen, eine Zusatzschnittstelle an einer Steuerung vorzusehen, welche ansonsten Standardbetätigungselemente zum normalen Betätigen der Ladebrücke aufweist. Mit den Standardbetätigungselementen lassen sich die üblichen Vorgänge wie Anheben der Plattform der Ladebrücke, Ausfahren der Vorschublippe, Einfahren der Vorschublippe und gegebenenfalls automatisches Zurückfahren der Ladebrücke in die Ruhestellung betätigen. Gemäß [2] ist diese Benutzerschnittstelle mit den Standardbetätigungselementen gesperrt, falls nicht aus der Ruhestellung heraus zuvor die Zusatzschnittstelle betätigt wird. Die Zusatzschnittstelle bewirkt dann ein Ausfahren der Vorschublippe in die Zwischenstellung. So ist sichergestellt, dass stets der Abstand zwischen Ladebrücke und Fahrzeug verringert ist, wenn der Laderaumabschluss nach Andocken des Fahrzeuges geöffnet werden soll. Die Literaturstelle [2] offenbart eine Vorschub-Ladebrücke nach dem Oberbegriff des Anspruchs 1 und ein Verfahren zum Betreiben einer Vorschub-Ladebrücke nach dem Oberbegriff des Anspruchs 8.

Die Erfindung hat sich zur Aufgabe gestellt, eine Vorschub-Ladebrücke zu schaffen, die einfacher und schneller zu bedienen ist, ohne Abstriche bei der Sicherheit zu machen.

Zum Lösen dieser Aufgabe werden die Vorschub-Ladebrücke gemäß Anspruch 1 sowie das Betriebsverfahren gemäß Anspruch 8 vorgeschlagen. Vorteilhafte Ausgestaltungen der Erfindung sind Gegenstand der Unteransprüche. Die Erfindung schafft gemäß einem ersten Aspekt davon eine Vorschub-Ladebrücke nach Anspruch 1, umfassend
eine mittels eines Brückenantriebs heb- und senkbare Plattform,
eine an der Plattform angebrachte, mittels eines Lippenantriebes antreibbare Vorschublippe und
eine Steuerung zum Steuern des Brückenantriebs und des Lippenantriebes, wobei die Steuerung eine Benutzerschnittstelle zur Betätigung durch einen Benutzer aufweist, wobei die Benutzerschnittstelle als Standardbetätigungselemente für den Standardbetrieb der Vorschub-Ladebrücke (10) zumindest ein Plattform-Betätigungselement zum Anheben der Plattform, ein Vorschublippen-Ausfahr-Betätigungselement zum Ausfahren der Vorschublippe und ein Vorschublippen-Einfahr-Betätigungselement zum Einfahren der Vorschublippe aufweist und wobei die Steuerung dazu ausgebildet ist, bei in der Ruhestellung befindlichen Vorschub-Ladebrücke lediglich ein vorbestimmtes Standardbetätigungselement aktiv zu halten und alle anderen Betätigungselemente zu sperren.

Erfindungsgemäß ist die Steuerung dazu ausgebildet, bei aus der Ruhestellung der Vorschub-Ladebrücke heraus erfolgter Betätigung des vorbestimmten Standardbetätigungselements ein Ausfahren der Vorschublippe ohne Anheben der Plattform in eine Zwischenstellung zum Verringern eines Abstandes zwischen der Vorschublippe und einem zu beladenden Fahrzeug zu bewirken.

Es ist bevorzugt, dass ein Zwischenstellung-Positionssensor zur Erfassung der Zwischenstellung vorgesehen ist und dass die Steuerung dazu ausgebildet ist, aufgrund eines Signals des Zwischenstellung-Positionssensors die Sperre anderer Betätigungselemente aufzuheben.

Es ist bevorzugt, dass eine Warnsignalausgabe zum Anzeigen eines Warnsignals, dass sich die Vorschublippe nicht in einer Aufliegeposition befindet, in der sie auf dem Fahrzeug mit einer Mindestüberlappung aufliegt, vorgesehen ist.

Es ist bevorzugt, dass das vorbestimmte Standardbetätigungselement das Vorschublippen-Ausfahr-Betätigungselement ist.

Es ist bevorzugt, dass als weiteres Standardbetätigungselement ein Autoreturn-Betätigungselement vorgesehen ist.

Es ist bevorzugt, dass die Steuerung dazu ausgebildet ist, bei Betätigung des Autoreturn-Betätigungselements von einer Aufliegeposition aus, in der die Vorschublippe auf dem Fahrzeug aufliegt, die Vorschublippe zunächst in die Zwischenstellung und in eine abgesenkte Position zu bewegen, und erst bei erneuter Betätigung oder bei länger andauernder Betätigung des Autoreturn-Betätigungselements eine Rückführung der Vorschub-Ladebrücke in die Ruhestellung zu veranlassen.

Es ist bevorzugt, dass außer den Standardbenutzerbetätigungselementen keine weiteren Betätigungselemente zur Betätigung der Vorschub-Ladebrücke vorgesehen sind.

Gemäß einem weiteren Aspekt schafft die Erfindung ein Verfahren zum Betreiben einer Vorschub-Ladebrücke nach Anspruch 8, die eine mittels eines Brückenantriebs heb- und senkbare Plattform, eine an der Plattform angebrachte, mittels eines Lippenantriebes antreibbare Vorschublippe und eine Steuerung zum Steuern des Brückenantriebs und des Lippenantriebes aufweist, wobei die Steuerung eine Benutzerschnittstelle zur Betätigung durch einen Benutzer aufweist, wobei die Benutzerschnittstelle als Standardbetätigungselemente für den Standardbetrieb der Vorschub-Ladebrücke (10) zumindest ein Plattform-Betätigungselement zum Anheben der Plattform, ein Vorschublippen-Ausfahr-Betätigungselement zum Ausfahren der Vorschublippe und ein Vorschublippen-Einfahr-Betätigungselement zum Einfahren der Vorschublippe aufweist umfassend:
Aktivieren nur eines vorbestimmten der vorgenannten
Standardbetätigungselemente und Sperren aller anderen Betätigungselemente zum Betätigen des Brückenantriebes und des Lippenantriebes bei in Ruhestellung befindlicher Vorschub-Ladebrücke,
Verfahren der Vorschublippe in eine Zwischenstellung ohne Anheben der Plattform bei Betätigen des vorbestimmten Standardbetätigungselements aus der Ruhestellung heraus und
Aktivieren der anderen Standardbetätigungselemente bei Erfassen der Zwischenstellung.

Vorzugsweise umfasst das Verfahren:
Aktivieren eines Warnsignals bei Aktivieren des vorbestimmten Standardbetätigungselements und
Inaktivieren des Warnsignals bei Erfassen einer Aufliegeposition, in der die Vorschublippe mit einer Mindestüberlappung an einer Kante des Fahrzeugs aufliegt.

Bei den Ausführungsformen der Erfindung werden bereits bestehende Tasten zum Ausfahren der Trittfläche benutzt, während bei der Literaturstelle [2] eine Zusatzschnittstelle vorgesehen wird.

Bei den erfindungsgemäßen Ausgestaltungen gibt es demnach keine Zusatzschnittstelle. Es werden einfach Standard-Eingabeschnittstellen - vorzugsweise Tasten in oder auf der eigentlichen Verlade-Brückensteuerung - genutzt, und alle anderen vorhandenen Eingabeschnittstellen sind vorzugsweise so lange gesperrt, bis eine vorbestimmte Standard-Schnittstelle betätigt wurde.

Weiter können Signalleuchten als Warnsignalgeber und/oder Reedkontakte als Positionssensoren vorgesehen sein.

Ausführungsbeispiele der Erfindung werden im Folgenden anhand der beigefügten Zeichnungen näher erläutert. Darin zeigt:
- Fig. 1: eine perspektivische Darstellung einer Vorschub-Ladebrücke im Ruhezustand während des Andockens durch ein Fahrzeug;
- Fig. 2: eine Draufsicht auf eine Ladebrückensteuerung für die Ladebrücke von Fig. 1 gemäß einer ersten Ausführungsform;
- Fig. 3: eine Draufsicht auf eine Ladebrückensteuerung für die Ladebrücke von Fig. 1 gemäß einer zweiten Ausführungsform;
- Fig. 4: eine perspektivische Darstellung einer Sondersteuerung mit Montagemitteln, welche zu einer der Ladebrückensteuerungen gemäß Fig. 2 oder Fig. 3 hinzugefügt werden kann, um einen Betrieb gemäß einer Ausführungsform der Erfindung auszuführen;
- Fig. 5: einen Betätigungsschritt zum Betätigen einer erstmaligen Bewegung der Ladebrücke gemäß dem Betrieb der Ausführungsform der Erfindung ausgehend von der in Fig. 1 dargestellten Ruhestellung der Ladebrücke;
- Fig. 6: die Ladebrücke von Fig. 1 nach Durchführung des in Fig. 5 angedeuteten ersten Betätigungsschritts;
- Fig. 6a: ein Detail aus Fig. 6;
- Fig. 7: eine schematische Darstellung zur Erläuterung eines in Fig. 6 dargestellten optischen Warnsignals;
- Fig. 8: einen weiteren nach dem Schritt von Fig. 6 durchzuführenden Schritt im Betrieb der Ladebrücke gemäß der bevorzugten Ausgestaltung der Erfindung;
- Fig. 9: eine Darstellung von nach dem in Fig. 8 dargestellten Schritt erfolgenden Betätigungsschritten;
- Fig. 10: die Ladebrücke nach dem Durchführen der in Fig. 9 dargestellten Betätigungsschritte;
- Fig. 10a: ein Detail aus Fig. 10, wo eine Vorschublippe der Ladebrücke in einer korrekten Auflageposition dargestellt ist;
- Fig. 10b: das Detail aus Fig. 10 bei einer inkorrekten Position der Ladebrücke zusammen mit einem bei einer solchen Position durchzuführen Betätigungsschritt;
- Fig. 11: die Ladebrücke von Fig. 10 mit der Vorschublippe in korrekter Auflageposition nach Beendigung des Ladevorgangs;
- Fig. 12: eine schematische Darstellung eines auf die Situation von Fig. 11 durchzuführenden Betätigungsschritts;
- Fig. 13: die Stellung der Ladebrücke nach dem Betätigungsschritt von Fig. 12;
- Fig. 13a: ein Detail aus Fig. 13;
- Fig. 14: einen weiteren Betriebsschritt bei dem Betriebsverfahren gemäß der bevorzugten Ausführungsform der Erfindung, welcher bei der in Fig. 13 dargestellten Stellung der Verladebrücke durchzuführen ist;
- Fig. 15: eine schematische Darstellung eines weiteren Betätigungsschrittes, welcher nach dem Schritt von Fig. 14 durchzuführen ist;
- Fig. 16: die Endposition der Ladebrücke, wobei die Ladebrücke in die Ruhestellung verfahren ist;
- Fig. 16a: ein Detail aus Fig. 16 mit einer korrekten Ruhestellung;
- Fig. 16b: das Detail aus Fig. 16 bei einer inkorrekten Ruhestellung sowie einem bei einer solchen Position durchzuführenden Betätigungsschritt.

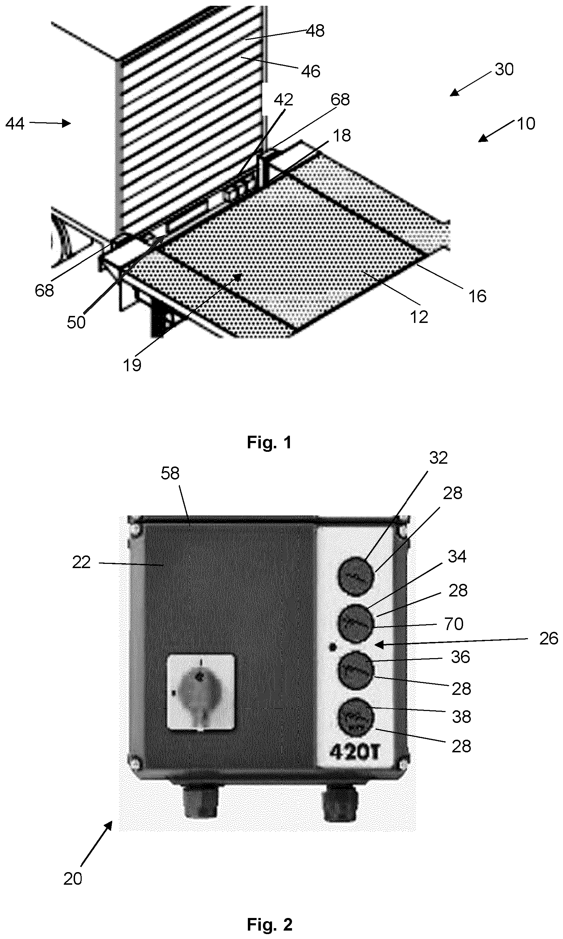

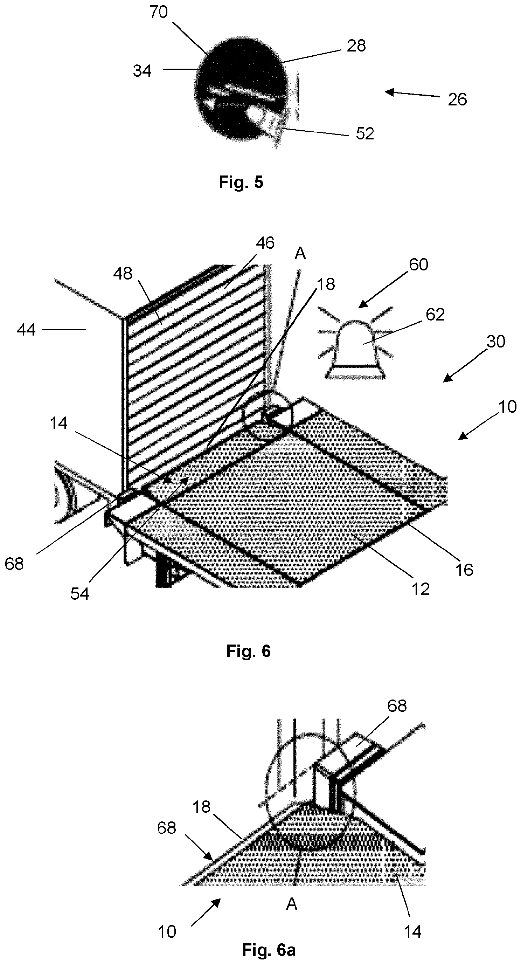

In den Figuren 1, 6, 8, 10, 11, 13, 14 und 16 ist eine Vorschub-Ladebrücke 10 in unterschiedlichen Positionen während eines Betriebsverfahrens gemäß einer Ausführungsform der Erfindung dargestellt. Die Vorschub-Ladebrücke 10 weist eine Plattform 12 und eine Vorschublippe 14 auf. Die Fig. 1 und 5 bei 16 zeigen in der Reihenfolge der Nummerierung der Figuren durchzuführende Schritte des Betriebsverfahrens.

Die Plattform 12 kann über einen hier nicht näher dargestellten Brückenantrieb angehoben werden. Beispielsweise ist der Brückenantrieb ein hydraulischer Antrieb mit einer Pumpe, welcher bei Betrieb der Pumpe über einen Hydraulikzylinder die Plattform 12 anhebt. Die Plattform 12 ist beispielsweise an einem rückwärtigen Ende 16 schwenkbar gelagert und kann so durch den Brückenantrieb nach oben geschwenkt werden. Ein Absenken der Plattform 12 aus einer angehobenen Position kann über ebenfalls hier nicht näher dargestellte Hydraulikventile erfolgen, welche Hydraulikflüssigkeit aus dem Hydraulikzylinder abfließen lässt.

An einem vorderen Ende 18 der Plattform 12 weist die Vorschub-Ladebrücke 10 die Vorschublippe 14 auf, welche an der Plattform 12 parallel zur Ebene der Plattform 12 nach vorne und nach hinten verschiebbar ist. Die Verschiebebewegung wird durch einen hier nicht näher dargestellten Lippenantrieb angetrieben, welcher ebenfalls als Hydraulikzylinder ausgebildet sein kann und beispielsweise als doppelt wirkender Zylinder ausgebildet ist.

Eine derartige Vorschub-Ladebrücke 10 mit Brückenantrieb und Lippenantrieb ist beispielsweise in der Literaturstelle [1] näher beschrieben und von der Hörmann KG Verkaufsgesellschaft auf dem Markt erhältlich.

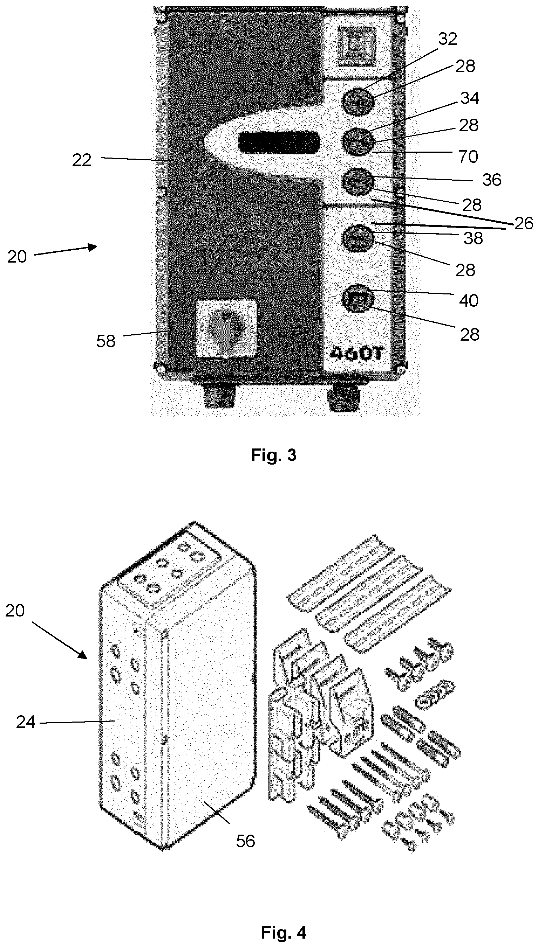

Die Vorschub-Ladebrücke 10 weist eine Steuerung 20 auf. Die Steuerung 20 weist eine Ladebrückensteuerung 22, von denen zwei Ausführungsformen in der Figur 2 und 3 dargestellt sind, und eine als Sondersteuerung ausgeführte Verladesteuerung 24 auf. Bei anderen, hier nicht näher dargestellten Ausführungen ist nur eine in einem Gehäuse untergebrachte Steuerung vorgesehen, die die Funktionen der Ladebrückensteuerung 22 und der Verladesteuerung 24 vereint.

Die Ladebrückensteuerung 22 weist eine Benutzerschnittstelle 26 mit mehreren Standardbetätigungselementen 28 auf. Je nach Einbauort und weiteren Einrichtungen an der in den Figuren 1, 6, 8, 10, 11, 13, 14 und 16 dargestellten Ladestelle 30 kann die in Fig. 2 dargestellte erste Ausführungsform der Ladebrückensteuerung 22 oder die in der Fig. 3 dargestellte zweite Ausführungsform der Ladebrückensteuerung 22 eingesetzt werden.

In einer Standardversion, wie sie auch in der Literaturstelle [1] beschrieben und gezeigt ist, wird allein die Ladebrückensteuerung 22 gemäß Fig. 2 und 3, eventuell noch ergänzt durch eine hier nicht näher dargestellte, aber in [1] näher beschriebene Torsteuerung verwendet.

Die Benutzerschnittstelle 26 der Ladebrückensteuerung 22 weist als Standardbetätigungselemente 28 ein Plattform-Betätigungselement 32, ein Vorschublippen-Ausfahr-Betätigungselement 34 und ein Vorschublippen-Einfahr-Betätigungselement 36 auf. Bei der dargestellten Ausführungsform der Verladesteuerung 24 ist als weiteres Betätigungselement 28 noch ein Autoreturn-Betätigungselement 38 vorgesehen.

Die Ausführungsform von Fig. 3 weist als weiteres Standardbetätigungselement 28 noch ein Torabdichtungs-Betätigungselement 40 auf. Die Betätigungselemente 32-40 können alle als Tasten ausgebildet sein. Selbstverständlich könnte die Benutzerschnittstelle 26 auch anders ausgebildet sein, z. B. mit einem berührungsempfindlichen Bildschirm versehen sein, auf der entsprechende Betätigungselemente grafisch dargestellt werden. Vielfältige andere bekannte Benutzerschnittstellen 26 mit entsprechenden Funktionen können zur Realisierung der Standardbetätigungselemente 28 vorgesehen sein.

Mit diesen Standardbetätigungselementen 28 wird bei nicht erfindungsgemäß erfolgter Ausgestaltung der Steuerung 20 und einem nicht erfindungsgemäßen Betrieb ein Standardbetrieb der Vorschub-Ladebrücke 10 durchgeführt. Dies ist beispielsweise dann der Fall, wenn zwischen einer Ruhestellung der Vorschub-Ladebrücke 10 und einer Fahrzeughinterkante 42 des an der Ladestelle 30 angedockten Fahrzeuges 44 nur ein geringer Abstand verbleibt, oder falls nur ein Betrieb vorgesehen ist, bei dem ein Laderaumabschluss 46 zum Abschließen des Laderaums 48 des Fahrzeuges 44 wie z. B. Fahrzeugtüren oder ein im Fahrzeug vorgesehenes Rolltor 48 stets vom Fahrer des Fahrzeuges 44 vor dessen Andocken zu öffnen ist und stets erst nach Wegfahren von der Ladestelle 30 nach Beendigung des Ladevorgangs wieder zu schließen ist.

Bei einem solchen nicht erfindungsgemäßen Standardbetrieb dient das Plattform-Betätigungselement 32 zum Anheben der Plattform 12. Das Vorschublippen-Ausfahr-Betätigungselement 34 dient zum Ausfahren der Vorschublippe (Bewegung nach vorne). Das Vorschublippen-Einfahr-Betätigungselement 36 dient zum Einfahren der Vorschublippe. Durch eine einmalige Betätigung des Autoreturn-Betätigungselements 38 kann die Vorschub-Ladebrücke 10 aus einer Aufliegeposition an dem Fahrzeug 44 in ihre Ruhestellung zurückverfahren werden. Alle Standardbetätigungselemente 28 können entsprechend durch eine Bedienperson angesteuert werden.

Es kann jedoch Situationen geben, bei denen zwischen der Fahrzeughinterkante 42 eines an der Ladestelle 30 angedockten Fahrzeuges 44 und dem vorderen Ende 18 der in Ruhestellung verfahrenen Vorschub-Ladebrücke 10 ein größerer Abstand 50 existiert.

Dies ist insbesondere dann, aber nicht nur, der Fall, wenn ein hier nicht näher dargestelltes Tor der Ladestelle 30 in seiner Ruhestellung nicht auf der Plattform 12 aufliegt, sondern vor der Vorschub-Ladebrücke 10 herunter in seine Schließposition verfährt.

Soll bei solch einer Situation mit einem größeren Abstand 50 ein Betrieb ermöglicht werden, bei der eine Bedienperson 52 erst nach Andocken des Fahrzeuges 44 den Laderaumabschluss 46 öffnet, um dann eine Verladevorgang (Einladen oder Ausladen) durchzuführen, dann besteht Unfallgefahr durch diesen Abstand 50. Laderäume 47 von Lastkraftwagen oder sonstigen Fahrzeugen 44, wie z. B. Hänger oder Aufbauten oder Container sind oft recht hoch, so dass man zum vollständigen Öffnen des Laderaumes 47 sehr nah an das Fahrzeug 44 herantreten muss.

Zum Durchführen eines entsprechenden Öffnungs- oder Schließvorganges des Laderaumabschlusses 46 bei dem angedockten Fahrzeug 44 wird daher bei dem hier im Folgenden näher erläuterten erfindungsgemäßen Betrieb gemäß der Erfindung die Vorschublippe 14 in eine in den Figuren 6, 8, 13 und 14 dargestellte Zwischenstellung 54 verfahren.

Wird die Vorschub-Ladebrücke 10 gemäß der Erfindung für eine Ausgestaltung des erfindungsgemäßen Betriebes mit Verfahren der Vorschublippe 14 in die Zwischenstellung 54 ausgestaltet, dann erfolgt dieses Verfahren in eine Zwischenstellung 54 zwangsweise, ohne dass die Bedienperson 52 hierzu eine gesonderte Betätigung durchführen müsste. So wird verhindert, dass eine Situation mit großen Abstand 50 zwischen Fahrzeug 44 und vorderen Ende 18 der Vorschub-Ladebrücke 10 während eines Öffnungs- und Schließvorganges des Laderaumabschlusses 46 vorhanden ist.

Um die Vorschub-Ladebrücke 10 für den entsprechenden Betrieb einzurichten, wird zusätzlich zu der Ladebrückensteuerung 22 noch die Verladesteuerung 24 montiert und mit der Verladesteuerung 24 verbunden, so dass die Kombination aus Ladebrückensteuerung 22 und Verladesteuerung 24 die Steuerung 20 bildet. Die Verladesteuerung 24 ist in einem Ausführungsbeispiel vorgesehen, jedoch nicht unbedingt erforderlich, wie oben erwähnt können alle notwendigen Funktionen z.B. auch in der Ladebrückensteuerung 20 vereint sein.

Bei der einen Ausführungsform sind in der Verladesteuerung 24 und der Ladebrückensteuerung 22 entsprechende Ablaufprogramme abgespeichert, welche durch Anschluss der Verladesteuerung 24 an die Ladebrückensteuerung 22 aktiviert werden, so dass nur noch der im Folgenden näher anhand der Figuren 1-16 erläuterte Betrieb gemäß einer Ausführungsform durchführbar ist.

Dieser Betrieb wird weiterhin durch die Standardbetätigungselemente 28 der an der Verladesteuerung 24 ohnehin vorhandenen Benutzerschnittstelle 26 durchgeführt. Wie Fig. 4 zeigt, hat die Verladesteuerung 24 selbst keinerlei Benutzerschnittstelle und keinerlei Betätigungselemente. Alle Betätigungen erfolgen weiterhin mit den Standardbetätigungselementen 28.

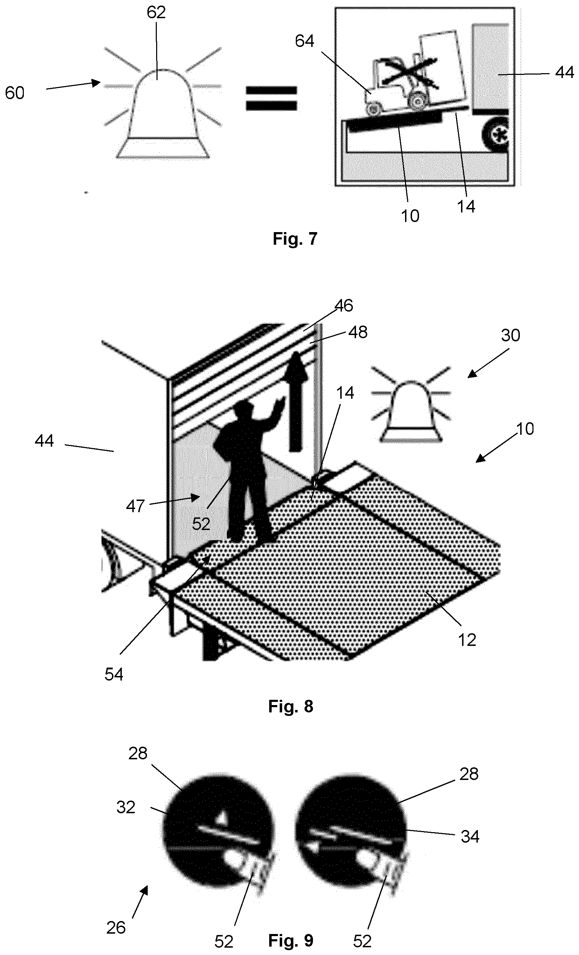

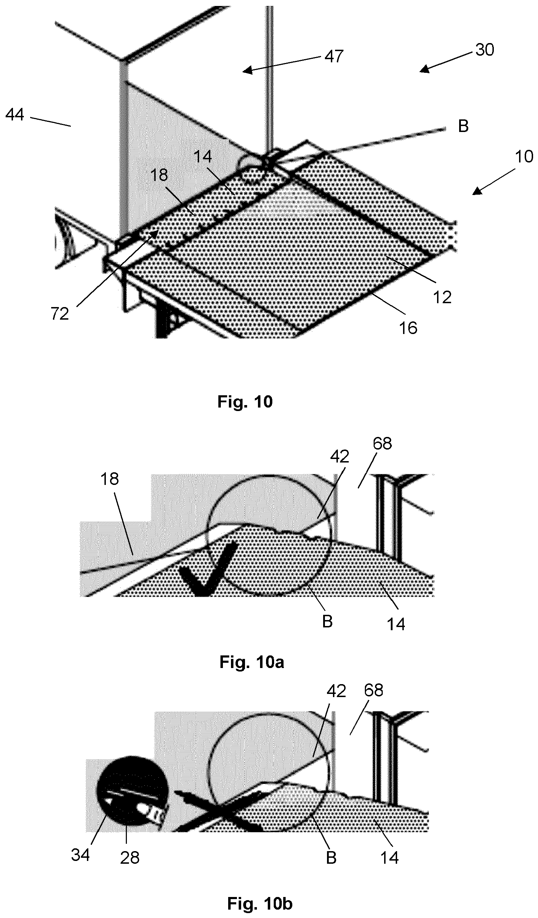

Fig. 1 zeigt die Vorschub-Ladebrücke 10 in Ruhestellung bzw. Grundstellung mit einem angedockten Lastkraftwagen als Beispiel für das Fahrzeug 44. Fig. 8 zeigt die Vorschub-Ladebrücke 10 in der Position "Ausgefahren" - Zwischenstellung 54 - zur Überbrückung des Abstandes 50 und Fig. 10 zeigt die auf dem Lastkraftwagen als Beispiel für das Fahrzeug 44 aufliegende Vorschub-Ladebrücke 10. Dabei muss wie in Fig. 10a dargestellt ist, die Vorschublippe 14 in der korrekten Aufliegeposition mit einer Mindestüberlappung sein.

Das Gehäuse 56 der in Fig. 4 dargestellten Verladesteuerung 24, welches an das Gehäuse 58 der Ladebrückensteuerung 22 gemäß einer der Figuren 2 oder 3 angedockt wird, hat selbst keine Tasten oder sonstigen Betätigungselemente. Für die Funktion der Verladesteuerung 24, wie sie im Folgenden näher dargelegt wird, werden die Tasten (Beispiele für Betätigungselemente 28, 32, 34, 36, 38, 40) der Ladebrückensteuerung 22 benutzt.

Daher gibt es keine Zusatzschnittstelle. Man verwendet einfach die Standardeingabeschnittstelle - z. B. Tasten in oder auf der eigentlichen Ladebrückensteuerung 22. Bei in der Ruhestellung 19 oder Grundposition befindlichen Vorschub-Ladebrücke 10, wie sie in Fig. 1 dargestellt ist, ist nur ein vorbestimmtes Standardbetätigungselement 70 aktiv und lässt sich entsprechend betätigen. Alle anderen vorhandenen Eingabeschnittstellen oder Betätigungselemente 28 sind solange gesperrt, bis dieses vorbestimmte Standardbetätigungselement 70 betätigt wurde.

Wie weiter noch in den Figuren 6-8 sowie 13 und 14 und 16b angegeben, ist eine Warnsignalausgabe 60 in Form einer Signalleuchte 62 oder eines Blinklichts vorgesehen. Eine aktivierte Signalleuchte 62 bedeutet, wie in Fig. 7 angegeben, dass der Verladevorgang mit einem Befahren der Vorschub-Ladebrücke 10 mit Flurförderfahrzeugen oder sonstigen Ladegeräten nicht stattfinden darf. Weiter sind Positionssensoren 66 in Form von Reedkontakten vorgesehen.

Wie in Fig. 1 gezeigt kann bei der Vorschub-Ladebrücke 10 gemäß erfindungsgemäßer Ausgestaltung das Fahrzeug 44 mit geschlossenem Laderaumabschluss 46 an die Ladestelle 30 andocken, bis das Fahrzeug 44 gegen Anfahrpuffer 68 fährt. Eine korrekte Andockposition des Fahrzeuges 44 kann über eine Ampelanlage dem Fahrer angezeigt werden, wie dies genauer in [1] beschrieben und gezeigt ist.

Wie bei Fig. 1 zu sehen, gibt es in der Ruhestellung der Vorschub-Ladebrücke 10 den Abstand 50 zwischen der Fahrzeughinterkante 42 und dem vorderen Ende 18 der Vorschub-Ladebrücke 10.

In der Ruhestellung der Vorschub-Ladebrücke 10 sind alle Betätigungselemente bis auf ein vorbestimmtes Standardbetätigungselement 70 durch die Steuerung 20 gesperrt und nur das vorbestimmte Standardbetätigungselement 70 ist aktiv und führt bei Betätigung zu einer Funktion.

Bei dem in Fig. 5 dargestellten Ausführungsbeispiel ist das vorbestimmte Standardbetätigungselement 70 das Vorschublippen-Ausfahr-Betätigungselement 34. Bei einer anderen hier nicht näher dargestellten Ausführungsform, welche nicht Teil der Erfindung ist, kann das vorbestimmte Standardbetätigungselement 70 auch eine Taste "Tor auf" zur Aufwärtsbewegung eines hier nicht näher dargestellten Tores der Ladestelle 30 sein.

Bei der dargestellten Ausführungsform führt die Betätigung des Vorschublippen-Ausfahr-Betätigungselement 34 dazu, dass die Vorschublippe 12 in die Zwischenstellung 54 gefahren wird. Wie Fig. 6a zeigt, ist ein Positionssensor 66 in Form eines entsprechenden Reedkontaktes vorgesehen, der erfasst, wenn die Vorschublippe 14 in der korrekten Zwischenstellung 54 ist und ein entsprechendes Signal abgibt.

Bei der Ausgestaltung, welche nicht Teil der Erfindung ist, wo das vorbestimmte Standardbetätigungselement 70 z. B die Taste "Tor auf" ist, wird zunächst eine Öffnungsbewegung des Tores durchgeführt, so dass der Torflügel aus seiner Position in dem Fahrzeug 44 und der Vorschub-Ladebrücke 10 nach oben gefahren wird. Nach einer entsprechenden Zeitschaltung wird dann die Vorschublippe 14 gesteuert über die Steuerung 20, und genauer über Ablaufprogramme in der Verladesteuerung 24, durch entsprechendes Ansteuern des Lippenantriebes in die Zwischenstellung 54 verfahren. Es ergibt sich somit die in Figuren 6 und 8 dargestellte Situation, so dass die Bedienperson 52 auf der Vorschublippe 14 stehend den Laderaumabschluss 46 öffnen kann.

Die Steuerung 20 empfängt das Signal des Positionssensors 66, der erfasst, dass die Vorschublippe 14 sich in der Zwischenstellung 54 befindet. Aufgrund dieses Signals gibt die Steuerung 20 die anderen Standardbetätigungselemente 28 frei. Anschließend kann die Bedienperson 52 durch Betätigen des Plattform-Betätigungselement 32 und des Vorschublippen-Ausfahr-Betätigungselements 34 die Plattform 12 anheben und die Vorschublippe 14 ausfahren, wonach die Plattform 12 sich auf die Aufliegeposition absenkt, so dass die Vorschublippe 14 auf der Fahrzeughinterkante 42 aufliegt. Die korrekte Aufliegeposition ist in Fig. 10a dargestellt. Befindet sich die Vorschublippe 14 noch nicht in der korrekten Aufliegeposition 72, wie dies näher in Fig. 10b dargestellt ist, kann die Bedienperson 52 durch weiteres Betätigen der Vorschublippen-Ausfahr-Betätigungselement 34 in die korrekte Aufliegeposition verfahren. Auch hier können entsprechende Positionssensoren 66 vorgesehen kann, die anzeigen, dass noch nicht die korrekte Aufliegeposition 72 erreicht ist, was durch Ansteuern der Warnsignalausgabe 60 angezeigt werden kann.

Mit der korrekten Aufliegeposition 72 erlischt die Signalleiste 62 und der Ladevorgang kann durchgeführt werden. Hierbei fahren Flurförderfahrzeuge 64 oder dergleichen über die Vorschub-Ladebrücke in das Fahrzeug 44, um es zu beladen oder gegebenenfalls zu entladen.

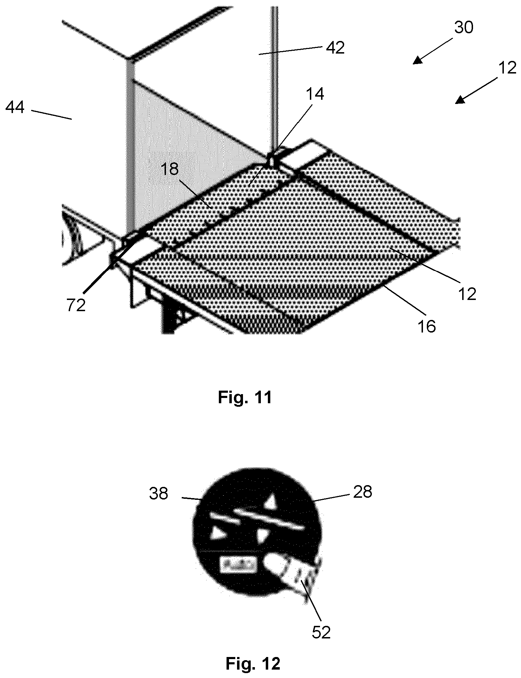

Nach Ende des Ladevorganges ergibt sich die in Fig. 11 dargestellte Situation, wo sich die Vorschublippe 14 noch in der Aufliegeposition 72 auf dem Fahrzeug 44 befindet.

Zum Zurückfahren der Vorschub-Ladebrücke 10 in die Ruhestellung kann die Bedienperson 52 dann Autoreturn-Betätigungselement 38 betätigen. Hier bewirkt die Ladesteuerung 24 wiederum einen Sonderbetrieb, der sich von dem Standardbetrieb gemäß [1] unterscheidet. Durch erstmaliges Betätigen des Autoreturn-Betätigungselements 38 hebt zunächst die Plattform 12 an, dann wird die Vorschublippe nicht vollständig eingefahren, sondern in die Zwischenstellung 54 eingefahren. Dann senkt die Plattform 12 sich in die waagrechte Position ab. Die waagrechte Position kann insbesondere der Ruhestellung 19 entsprechen. Das Anfahren der Zwischenstellung 54 wird wiederum über den Positionssensor 66 überwacht. Ist diese Zwischenstellung erreicht, kann beispielsweise nach angehobener Plattform die Plattform 12 in die waagrechte Position gefahren werden, wobei die Zwischenstellung 54 derart eingestellt ist, dass das vordere Ende 18 einen sehr geringen Abstand zu dem durch die Anfahrpuffer 68 definierten Position der Fahrzeughinterkante 42 des angedockten Fahrzeuges 44 hat. Beispielsweise liegt in der Zwischenstellung 54, das vordere Ende 18 der Vorschublippe 14 50mm (+/- 10mm) hinter der Anfahrebene der Anfahrpuffer 68.

Zu Erläuterungszwecken wird hier mit der Richtung "vorne" die Richtung hin zu dem Fahrzeug 44 und mit Richtung "rückwärts" die Richtung in das innere des mit der Ladestelle 30 versehenen Gebäude hinein bezeichnet.

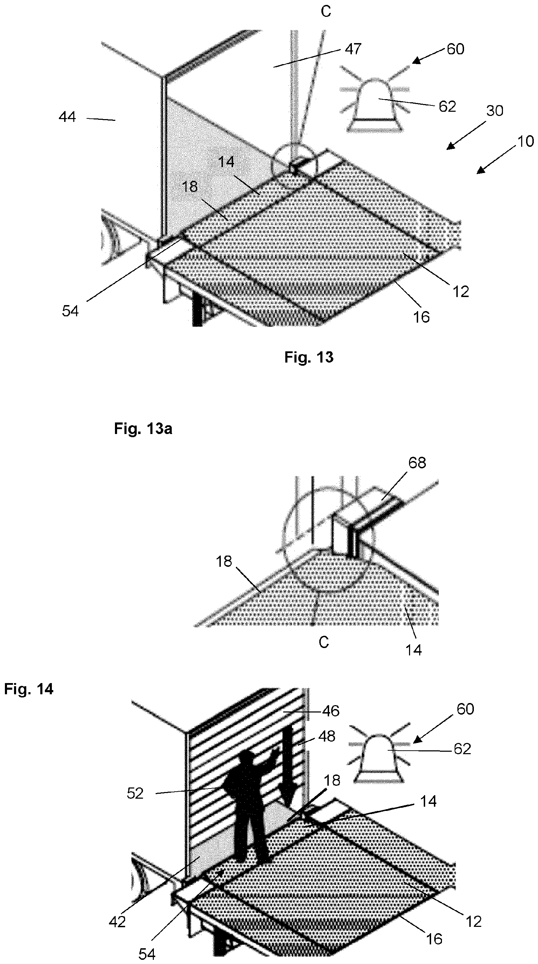

Befindet sich nun die Vorschub-Ladebrücke 10 wiederum in der Zwischenstellung 54, mit teilweise ausgefahrener Vorschublippe 14 und einer unter das Niveau des Bodens des Laderaumes 47 abgesenkten Plattform 12 kann, wie dies in Fig. 14 dargestellt ist, die Bedienperson 52 den Laderaum 47 durch Zuziehen des Laderaumabschlusses 46 oder dergleichen verschließen. Wie dies bei Figur 6 und 8 der Fall war, wird auch hier bei sich in Zwischenstellung befindlicher Vorschub-Ladebrücke die Warnsignalausgabe 60, also beispielsweise die Signalleuchte 62 betätigt.

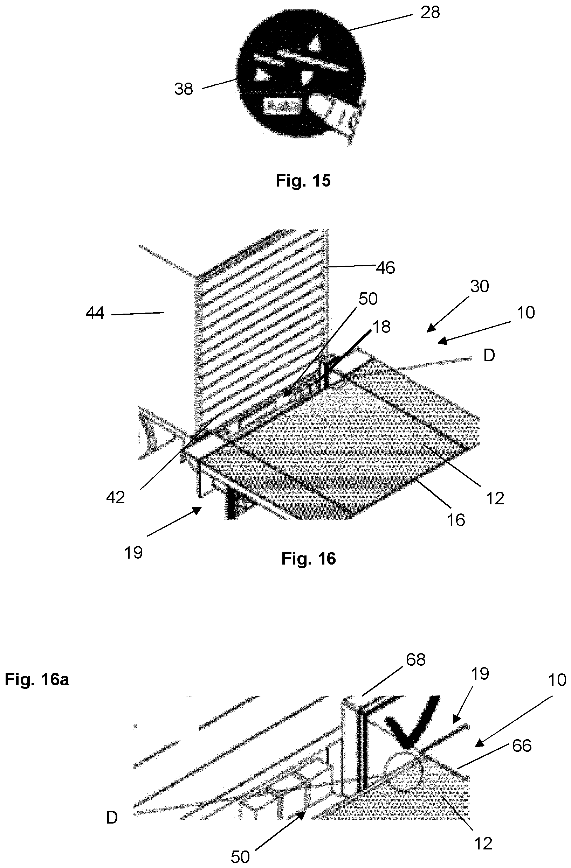

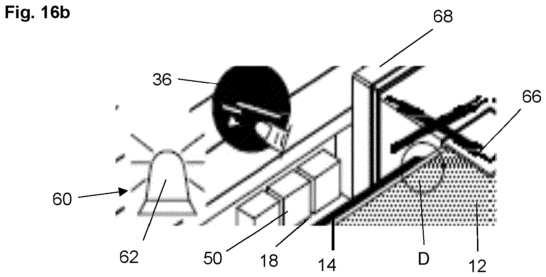

Durch eine erneute Betätigung des Autoreturn-Betätigungselements 38, wie dies in Fig. 15 dargestellt ist, bewegt sich die Vorschub-Ladebrücke 10 vollständig in ihre in Fig. 16 wiederum dargestellte Ruhestellung 19. Die korrekte Lage der Vorschublippe in der Ruhestellung 19 ist dabei in Fig. 16a dargestellt. Diese Lage kann ebenfalls wiederum durch einen Positionssensor 66, wie z. B. Reedkontakt, erfasst werden.

Ist die korrekte Ruhestellung 19 mit vollständig eingefahrener Ladebrücke noch nicht erreicht, kann z. B. die Warnsignalausgabe 60 betätigt werden, wie dies in Fig. 16b dargestellt ist. Bei solch einer Situation kann die Bedienperson 52 das Vorschublippen-Einfahr-Betätigungselement 36 betätigen, um die Vorschublippe 14 in die vollständig eingefahrene Position zu bewegen.

Einige Eigenschaften besonders bevorzugter Ausgestaltungen der Erfindung werden nachfolgend noch näher erläutert.

Die Steuerung 20 ist insbesondere durch eine Sondersteuerung verwirklicht, welche durch zusätzliche Hardware aufgebaut wird. Insbesondere erfolgt ein Andocken oder ein sonstiges Verbinden einer Verladesteuerung 24 mit einer ansonsten standardgemäß vorgesehenen Ladebrückensteuerung 22.

Bei einer Ausgestaltung der Ladestelle 12 mit der Vorschub-Ladebrücke 10 und einem hier nicht näher dargestellten Tor ergibt sich ein folgender Funktionsablauf bei der Funktion "Verladung starten":
1. Das Tor wird geöffnet.
2. Die Vorschub-Ladebrücke 10 wird aus ihrer Grundstellung bewegt, bis der z. B. durch einen Reedkontakt ausgebildete Positionssensor 66 erfasst, dass die Lippe in der Zwischenstellung 54 ist. Hier wird die Bewegung der Vorschub-Ladebrücke 10 gestoppt.
3. Die Verladebrücke sinkt in eine waagrechte Position ab. Auch die Plattform 12 befindet sich somit in einer Zwischenstellung 54, so dass die Plattform 12 unterhalb des Niveaus des Bodens des Laderaums 47 oder zumindest unterhalb des Niveaus eines Bewegungsraumes eines Laderaumabschlusses 46 liegt.
   Auch die Zwischenstellung 54 der Plattform 12 wird durch einen eigenen Positionssensor 66, wie z. B. einen weiteren Reedkontakt erfasst. Ab diesen Punkt wird eine Blitzleuchte oder eine sonstige Signalleuchte 62 als Warnsignalausgabe 60 angesteuert.
4. Die Türen des Lastkraftwagens oder des sonstigen Laderaumabschlusses 46 des Fahrzeuges 44 werden geöffnet.
5. Die Vorschub-Ladebrücke 10 wird in das Fahrzeug abgelegt. Die Blitzleuchte wird abgeschaltet.

Zur Erfassung der korrekten Aufliegeposition kann die Bedienperson entweder Markierungen an der Vorschublippe erfassen, wie dies genauer in [1] beschrieben und gezeigt ist. Man kann auch einen weiteren Positionssensor vorsehen, der ein korrektes Ausfahren der Vorschublippe über eine durch die Ebene der Anfahrpuffer 68 hinausgehende Position mit genügender Überlappung zwischen Vorschublippe 14 und Laderaum 47 erfasst.

Dann kann die Verladung durchgeführt werden.

Anschließend kann die Funktion "Verladung beenden" wie folgt durchgeführt werden:
1. Die Vorschub-Ladebrücke 10 wird auf die Zwischenstellung 54 zurückgefahren. Hierzu wird zunächst die Vorschublippe 14 in die Zwischenstellung zurückgefahren, was wiederum über den hier vorgesehenen Positionssensor 66 erfasst wird. Ab diesem Punkt wird die Blitzleuchte oder sonstige Signalleuchte zur Warnsignalausgabe 60 aktiviert.
2. Die Plattform 12 sinkt in die waagrechte Position (Beispiel für ihre Zwischenstellung) ab. Auch dies kann wiederum über den hier vorgesehenen weiteren Reedkontakt erfasst werden.
3. Die Türen des Lastkraftfahrzeuges bzw. der Laderaumabschluss 46 des Fahrzeuges 44 können geschlossen werden.
   Mit dem Erreichen der Ruhestellung - Verladebrücke 10 in Grundstellung - wird die Blitzleuchte oder sonstige Signalleuchte 62 abgeschaltet.
4. Wie bei Fig. 16b dargestellt kann dann, wenn der komplette Zyklus nicht geschafft wurde oder ein Stromausfall vorlag, es unter Umständen vorkommen, dass die Vorschub-Ladebrücke 10 nicht vollständig in die Ruhestellung 19 zurückkehrt. Dies wird visuell überprüft. In diesem Fall erfolgt auch kein Abschalten der Blitzleuchte. Wenn die Vorschub-Ladebrücke 10 nicht vollständig in die Ruhestellung zurückgekehrt ist, so ist dies manuell zu korrigieren. Die Blitzleuchte bzw. sonstige Signalleuchte 62 schaltet erst dann ab, wenn sich Vorschub-Ladebrücke 10 vollständig in ihrer Ruhestellung befindet.
5. Das Tor kann geschlossen werden.

Bei der Verwendung von Reedkontakten als Positionssensoren 66 können die zu erfassenden Positionen je nach vorheriger Bewegungsrichtung unterschiedlich sein. Hintergrund hierzu ist, dass Reedkontakte z. B. mit positiver und negativer Flanke in den Steuerungsablauf eingreifen und somit unterschiedliche Haltepositionen vorliegen.

Erreicht die Vorschublippe die Zwischenstellung 54, wird bei einer Ausgestaltung jeweils einmalig ein Stopp-Signal für eine vorbestimmte Zeit, beispielsweise 3-10 Sekunden, mehr als besonders 5 Sekunden ausgegeben. Wird daraufhin die Vorschub-Ladebrücke durch Betätigen des entsprechenden Standardbetätigungselements 28 weiter aus dieser Zwischenstellung bewegt, erfolgt der standardgemäße Ladebrückenbewegungsablauf.

### Bezugszeichenliste:

- 10: Vorschub-Ladebrücke
- 12: Plattform
- 14: Vorschublippe
- 16: rückwärtiges Ende
- 18: vorderes Ende
- 19: Ruhestellung
- 20: Steuerung
- 22: Ladebrückensteuerung
- 24: Verladesteuerung
- 26: Benutzerschnittstelle
- 28: Standardbetätigungselement
- 30: Ladestelle
- 32: Plattform-Betätigungselement
- 34: Vorschublippen-Ausfahr-Betätigungselement
- 36: Vorschublippen-Einfahr-Betätigungselement
- 38: Autoreturn-Betätigungselement
- 40: Torabdichtungs-Betätigungselement
- 42: Fahrzeughinterkante
- 44: Fahrzeugs
- 46: Laderaumabschluss
- 47: Laderaum
- 48: Rolltor am Fahrzeug
- 50: Abstand
- 52: Bedienperson
- 54: Zwischenstellung
- 56: Gehäuse (Verladesteuerung)
- 58: Gehäuse (Ladebrückensteuerung)
- 60: Warnsignalausgabe
- 62: Signalleuchte
- 64: Flurförderfahrzeug
- 66: Positionssensor
- 68: Anfahrpuffer
- 70: vorbestimmtes Standardbetätigungselement
- 72: Aufliegeposition

## Patentansprüche

1. Vorschub-Ladebrücke (10), umfassend
eine mittels eines Brückenantriebs heb- und senkbare Plattform (12),
eine an der Plattform (12) angebrachte, mittels eines Lippenantriebes antreibbare Vorschublippe (14) und
eine Steuerung (20) zum Steuern des Brückenantriebs und des Lippenantriebes, wobei die Steuerung (20) eine Benutzerschnittstelle (26) zur Betätigung durch einen Benutzer aufweist, wobei die Benutzerschnittstelle (26) als Standardbetätigungselemente (28) für den Standardbetrieb der Vorschub-Ladebrücke (10) zumindest ein Plattform-Betätigungselement (32) zum Anheben der Plattform (12), ein Vorschublippen-Ausfahr-Betätigungselement (34) zum Ausfahren der Vorschublippe (14) und ein Vorschublippen-Einfahr-Betätigungselement (36) zum Einfahren der Vorschublippe (14) aufweist,
**dadurch gekennzeichnet,**
**dass** die Steuerung (20) dazu ausgebildet ist, bei in der Ruhestellung (19) befindlichen Vorschub-Ladebrücke (10) lediglich ein vorbestimmtes Standardbetätigungselement (70) aktiv zu halten und alle anderen Standardbetätigungselemente (28) zu sperren und
**dass** die Steuerung (20) dazu ausgebildet ist, bei aus der Ruhestellung (19) der Vorschub-Ladebrücke (10) heraus erfolgter Betätigung des vorbestimmten Standardbetätigungselements (70) ein Ausfahren der Vorschublippe (14) ohne Anheben der Plattform (12) in eine Zwischenstellung (54) zum Verringern eines Abstandes (50) zwischen der Vorschublippe (14) und einem zu beladenden Fahrzeug (44) zu bewirken.

2. Vorschub-Ladebrücke (10) nach Anspruch 1,
**dadurch gekennzeichnet,**
**dass** ein Zwischenstellung-Positionssensor (66) zur Erfassung der Zwischenstellung (54) vorgesehen ist und dass die Steuerung (20) dazu ausgebildet ist, aufgrund eines Signals des Zwischenstellung-Positionssensors (66) die Sperre anderer Betätigungselemente aufzuheben.

3. Vorschub-Ladebrücke (10) nach einem der voranstehenden Ansprüche,
**dadurch gekennzeichnet,**
**dass** eine Warnsignalausgabe (60) zum Anzeigen eines Warnsignals, dass sich die Vorschublippe (14) nicht in einer Aufliegeposition befindet, in der sie auf dem Fahrzeug (44) mit einer Mindestüberlappung aufliegt, vorgesehen ist.

4. Vorschub-Ladebrücke (10) nach einem der voranstehenden Ansprüche,
**dadurch gekennzeichnet,**
**dass** das vorbestimmte Standardbetätigungselement (70) das Vorschublippen-Ausfahr-Betätigungselement (34) ist.

5. Vorschub-Ladebrücke (10) nach einem der Ansprüche,
**dadurch gekennzeichnet,**
**dass** als weiteres Standardbetätigungselement (28) ein Autoreturn-Betätigungselement (38) vorgesehen ist.

6. Vorschub-Ladebrücke (10) nach Anspruch 5,
**dadurch gekennzeichnet,**
**dass** die Steuerung (20) dazu ausgebildet ist, bei Betätigung des Autoreturn-Betätigungselements (38) von einer Aufliegeposition aus, in der die Vorschublippe (14) auf dem Fahrzeug (44) aufliegt, die Vorschublippe (14) zunächst in die Zwischenstellung (54) und in eine abgesenkte Position zu bewegen, und erst bei erneuter Betätigung oder bei länger andauernder Betätigung des Autoreturn-Betätigungselements (38) eine Rückführung der Vorschub-Ladebrücke (10) in die Ruhestellung (19) zu veranlassen.

7. Vorschub-Ladebrücke (10) nach einem der voranstehenden Ansprüche,
**dadurch gekennzeichnet,**
**dass** außer den Standardbetätigungselementen (28) keine weiteren Betätigungselemente zur Betätigung der Vorschub-Ladebrücke (10) vorgesehen sind.

8. Verfahren zum Betreiben einer Vorschub-Ladebrücke (10), die eine mittels eines Brückenantriebs heb- und senkbare Plattform (12), eine an der Plattform angebrachte, mittels eines Lippenantriebes antreibbare Vorschublippe (14) und eine Steuerung (20) zum Steuern des Brückenantriebs und des Lippenantriebes aufweist, wobei die Steuerung eine Benutzerschnittstelle (26) zur Betätigung durch einen Benutzer aufweist, wobei die Benutzerschnittstelle (26) als Standardbetätigungselemente (28) für den Standardbetrieb der Vorschub-Ladebrücke (10) zumindest ein Plattform-Betätigungselement zum Anheben der Plattform, ein Vorschublippen-Ausfahr-Betätigungselement (34) zum Ausfahren der Vorschublippe (14) und ein Vorschublippen-Einfahr-Betätigungselement (36) zum Einfahren der Vorschublippe (14) aufweist, **gekennzeichnet durch** folgende Schritte:
Aktivieren nur eines vorbestimmten (70) der vorgenannten
Standardbetätigungselemente (28) und Sperren aller anderen Standardbetätigungselemente (28) zum Betätigen des Brückenantriebes und des Lippenantriebes bei in Ruhestellung (19) befindlicher Vorschub-Ladebrücke (10), Verfahren der Vorschublippe (14) in eine Zwischenstellung (54) ohne Anheben der Plattform (12) bei Betätigen des vorbestimmten Standardbetätigungselements (70) aus der Ruhestellung (19) heraus und
Aktivieren der anderen Betätigungselemente (28) bei Erfassen der Zwischenstellung (54).

9. Verfahren nach Anspruch 8,
**gekennzeichnet durch**
Aktivieren eines Warnsignals bei Aktivieren des vorbestimmten Standardbetätigungselements (70) und
Inaktivieren des Warnsignals bei Erfassen einer Aufliegeposition, in der die Vorschublippe (14) mit einer Mindestüberlappung an einer Kante des Fahrzeugs (44) aufliegt.

## Claims

1. Feed loading bridge (10), comprising
a platform (12) which can be raised and lowered by means of a bridge drive,
a feed lip (14) mounted on the platform (12) and drivable by a lip drive; and
a controller (20) for controlling the bridge drive and the lip drive, the controller (20) having a user interface (26) for actuation by a user, the user interface (26) having as standard actuating elements (28) for standard operation of the feed loading bridge (10) at least one platform actuating element (32) for raising the platform (12), a feed lip extension actuating element (34) for extending the feed lip (14), and a feed lip retraction actuating element (36) for retracting the feed lip (14),
**characterized in that** the controller (20) is designed to keep only one predetermined standard actuating element (70) active with the feed loading bridge (10) in the rest position (19) and to block all the other standard actuating elements (28), and
**in that** the controller (20) is designed, when the predetermined standard actuating element (70) is actuated from the rest position (19) of the feed loading bridge (10), to cause the feed lip (14) to be extended, without raising the platform (12), into an intermediate position (54) for reducing a distance (50) between the feed lip (14) and a vehicle (44) to be loaded.

2. Feed loading bridge (10) according to claim 1,
**characterized in that** an intermediate position sensor (66) is provided for detecting the intermediate position (54), and **in that** the controller (20) is designed to cancel the blocking of other actuating elements on the basis of a signal from the intermediate position sensor (66).

3. Feed loading bridge (10) according to any one of the preceding claims, **characterized in that** a warning signal output (60) is provided for indicating a warning signal that the feed lip (14) is not in the resting position in which it rests on the vehicle (44) with a minimum overlap.

4. Feed loading bridge (10) according to any one of the preceding claims, **characterized in that** the predetermined standard actuating element (70) is the feed lip extension actuating element (34).

5. Feed loading bridge (10) according to any one of the preceding claims, **characterized in that** an autoreturn actuating element (38) is provided as a further standard actuating element (28).

6. Feed loading bridge (10) according to claim 5,
**characterized in**
**in that** the controller (20) is designed, upon actuation of the autoreturn actuating element (38) from a resting position in which the feed lip (14) rests on the vehicle (44), to initially move the feed lip (14) into the intermediate position (54) and into a lowered position and to cause the feed loading bridge (10) to be returned into the rest position (19) only upon renewed actuation or upon actuation of the autoreturn actuating element (38) for a longer period of time.

7. Feed loading bridge (10) according to one of the preceding claims, **characterized in that** apart from the standard actuating elements (28) no further actuating elements are provided for actuating the feed loading bridge (10).

8. Method for operating a feed loading bridge (10), comprising a platform (12) which can be raised and lowered by means of a bridge drive, a feed lip (14) mounted on the platform (12) and drivable by a lip drive; and a controller (20) for controlling the bridge drive and the lip drive, the controller (20) having a user interface (26) for actuation by a user, the user interface (26) having as standard actuating elements (28) for standard operation of the feed loading bridge (10) at least one platform actuating element for raising the platform (12), a feed lip extension actuating element (34) for extending the feed lip (14), and a feed lip retraction actuating element (36) for retracting the feed lip (14),
**characterized by** the following steps:
activating only a predetermined one (70) of the aforementioned standard actuating elements (28) and disabling all other standard actuating elements (28) for actuating the bridge drive and the lip drive when the feed lip (10) is in the rest position (19),
moving the feed lip (14) to an intermediate position (54) without lifting the platform (12) upon actuation of the predetermined standard actuating element (70) from the rest position (19), and
activating the other actuating elements (28) upon detection of the intermediate position (54).

9. Method according to claim 8,
**characterized by**
activating a warning signal upon activation of the predetermined standard actuating element (70) and
deactivating the warning signal upon detecting a contact position in which the feed lip (14) is in contact with an edge of the vehicle (44) with a minimum overlap.

## Revendications

1. Pont de chargement d'avance (10), comprenant
une plate-forme (12) pouvant être levée et abaissée au moyen d'un entraînement de pont,
une lèvre d'avancement (14) montée sur la plate-forme (12) et pouvant être entraînée au moyen d'un entraînement à lèvres, et
un dispositif de commande (20) pour commander l'entraînement du pont et l'entraînement des lèvres, le dispositif de commande (20) comprenant une interface utilisateur (26) pour l'actionnement par un utilisateur, l'interface utilisateur (26) comprenant, comme éléments d'actionnement standard (28) pour le fonctionnement standard du pont de chargement d'avance (10), au moins un élément d'actionnement de plate-forme (32) pour soulever la plate-forme (12), un élément d'actionnement de sortie de la lèvre d'avance (34) pour sortir la lèvre d'avancement (14) et un élément d'actionnement de rétraction de la lèvre d'avance (36) pour rétracter la lèvre d'avancement (14),
**caractérisé en ce que**
le dispositif de commande (20) est conçue pour, lorsque le pont de chargement d'avance (10) se trouve en position de repos (19), maintenir actif uniquement un élément d'actionnement standard prédéterminé (70) et bloquer tous les autres éléments d'actionnement standard (28) et
**en ce que** le dispositif de commande (20) est conçue pour provoquer, en cas d'actionnement de l'élément d'actionnement standard prédéterminé (70) à partir de la position de repos (19) du pont de chargement d'avance (10), une sortie de la lèvre d'avancement (14) sans soulèvement de la plate-forme (12) dans une position intermédiaire (54) pour réduire une distance (50) entre la lèvre d'avancement (14) et un véhicule (44) à charger.

2. Pont de chargement d'avance (10) selon la revendication 1,
**caractérisé en ce qu'**un capteur de position intermédiaire (66) est prévu pour détecter la position intermédiaire (54) et que le dispositif de commande (20) est conçue pour supprimer le blocage d'autres éléments d'actionnement sur la base d'un signal du capteur de position intermédiaire (66).

3. Pont de chargement d'avance (10) selon l'une des revendications précédentes,
**caractérisé en ce qu'**il est prévu une sortie de signal d'avertissement (60) pour indiquer un signal d'avertissement selon lequel la lèvre d'avancement (14) n'est pas dans la position de contact dans laquelle elle repose sur le véhicule (44) avec un chevauchement minimum.

4. Pont de chargement d'avance (10) selon l'une des revendications précédentes,
**caractérisé en ce que** l'élément d'actionnement standard prédéterminé (70) est l'élément d'actionnement de sortie de la lèvre d'avance (34).

5. Pont de chargement d'avance (10) selon l'une des revendications précédentes,
**caractérisé en ce qu'**il est prévu comme autre élément d'actionnement standard (28) un élément d'actionnement Autoreturn (38).

6. Pont de chargement d'avance (10) selon la revendication 5,
**caractérisé en ce que** le dispositif de commande (20) est conçue pour, lors de l'actionnement de l'élément d'actionnement Autoreturn (38) à partir d'une position d'appui dans laquelle la lèvre d'avancement (14) repose sur le véhicule (44), déplacer la lèvre d'avancement (14) d'abord dans la position intermédiaire (54) et dans une position abaissée et ne provoquer un retour du pot de chargement d'avance (10) dans la position de repos (19) que lors d'un nouvel actionnement ou d'un actionnement prolongé de l'élément d'actionnement Autoreturn (38).

7. Pont de chargement d'avance (10) selon l'une des revendications précédentes,
**caractérisé en ce qu'**aucun autre élément d'actionnement que les éléments d'actionnement standard (28) n'est prévu pour actionner le pont de chargement d'avance (10).

8. Procédé de fonctionnement d'un pont de chargement d'avance (10) une plate-forme (12) pouvant être levée et abaissée au moyen d'un entraînement de pont, une lèvre d'avancement (14) montée sur la plate-forme (12) et pouvant être entraînée au moyen d'un entraînement à lèvres, et un dispositif de commande (20) pour commander l'entraînement du pont et l'entraînement des lèvres, le dispositif de commande (20) comprenant une interface utilisateur (26) pour l'actionnement par un utilisateur, l'interface utilisateur (26) comprenant, comme éléments d'actionnement standard (28) pour le fonctionnement standard du pont de chargement d'avance (10), au moins un élément d'actionnement de plate-forme (32) pour soulever la plate-forme (12), un élément d'actionnement de sortie de la lèvre d'avance (34) pour sortir la lèvre d'avancement (14) et un élément d'actionnement de rétraction de la lèvre d'avance (36) pour rétracter la lèvre d'avancement (14),
**caractérisé par** les étapes suivantes:
activation d'un seul élément prédéterminé (70) parmi les éléments d'actionnement standard (28) susmentionnés et blocage de tous les autres éléments d'actionnement standard (28) pour actionner l'entraînement du pont et l'entraînement de la lèvre lorsque le pont de chargement d'avance (10) est en position de repos (19),
le déplacement de la lèvre d'avancement (14) vers une position intermédiaire (54) sans soulever la plate-forme (12) lorsque l'élément d'actionnement standard prédéterminé (70) est actionné à partir de la position de repos (19), et
activer les autres éléments d'actionnement (28) lors de la détection de la position intermédiaire (54).

9. Procédé selon la revendication 8,
**caractérisé par** l'activation d'un signal d'avertissement lors de l'activation de l'élément d'actionnement standard prédéterminé (70), et
la désactivation du signal d'avertissement lors de la détection d'une position d'appui dans laquelle la lèvre d'avancement (14) repose avec un chevauchement minimal sur un bord du véhicule (44).
